# EUROPEAN PATENT APPLICATION

(11) **EP 4 137 380 A1**
(43) Date of publication of application: **22.02.2023**
(21) Application number: 21921647.0
(22) Date of filing: 02.12.2021
(51) Int. Cl.: B60W 50/08, B60W 50/00, G06F 3/0488, G06F 3/0484

(54) **HUMAN-COMPUTER INTERACTION METHOD AND APPARATUS, AND ELECTRONIC DEVICE AND STORAGE MEDIUM**

(30) Priority: 25.06.2021 CN 202110710822
(71) Applicant: BEIJING BAIDU NETCOM SCIENCE AND TECHNOLOGY CO. LTD., 100085 Beijing (CN)
(72) Inventor: ZHU, Houqiang, Beijing 100085 (CN); WEI, Pengfei, Beijing 100085 (CN)
(74) Representative: Maiwald GmbH
(86) International application number: PCT/CN2021/135044
(87) International publication number: WO 2022/267354

(57) **Abstract**

The disclosure provides a human-machine interaction method, a human-machine interaction apparatus, an electronic device and a storage medium, and relates to the field of AI technologies, and especially to the field of automatic driving technologies and intelligent transportation technologies. The method includes: determining a target controlled object corresponding to a first gesture in a first area of a touch pad in response to detecting the first gesture in the first area; determining a target control mode corresponding to a second gesture in a second area of the touch pad in response to detecting the second gesture in the second area; and controlling the target controlled object based on the target control mode. Thus, the target controlled object is controlled according to detected gestures in different areas of the touch pad, so that the driver's sight line does not have to leave the road ahead and functions of the vehicle can be controlled only by finger actions, which improves the driving safety.

## Description

### CROSS REFERENCE TO RELATED APPLICATION

This application claims a priority to Chinese Patent Application No. 202110710822.9, filed on June 25, 2021, the entire content of which is incorporated herein by reference.

### TECHNICAL FIELD

The disclosure relates to the field of artificial intelligence (AI) technologies, especially to the field of automatic driving technologies and intelligent transportation technologies, and in particular to a human-machine interaction method, a human-machine interaction apparatus, an electronic device and a storage medium.

### BACKGROUND

With the rapid development and popularization of automotive electronics, there are more and more control functions in automobiles. Currently, an interaction method commonly used for controlling various functions inside and outside a vehicle cabin is a click and touch interaction of keys (such as central control keys, steering wheel keys and cabin door keys) combined with options on a touch screen. Although this interaction method can realize a direct control of various functions of the vehicle, a driver is required to look away from the road ahead during an operation to find a position of a touch key and select the key, which may cause great potential safety hazards to a driving process.

### SUMMARY

The disclosure provides a human-machine interaction method, a human-machine interaction apparatus, an electronic device, a storage medium and a computer program product.

According to an aspect of the disclosure, a human-machine interaction method is provided. The method includes: determining a target controlled object corresponding to a first gesture in a first area of a touch pad in response to detecting the first gesture in the first area; determining a target control mode corresponding to a second gesture in a second area of the touch pad in response to detecting the second gesture in the second area; and controlling the target controlled object based on the target control mode.

According to another aspect of the disclosure, a human-machine interaction apparatus is provided. The apparatus includes a first determining module, a second determining module and a controlling module. The first determining module is configured to determine a target controlled object corresponding to a first gesture in a first area of a touch pad in response to detecting the first gesture in the first area. The second determining module is configured to determine a target control mode corresponding to a second gesture in a second area of the touch pad in response to detecting the second gesture in the second area. The controlling module is configured to control the target controlled object based on the target control mode.

According to another aspect of the disclosure, an electronic device is provided. The electronic device includes at least one processor and a memory communicatively coupled to the at least one processor. The memory is configured to store instructions executable by the at least one processor, and when the instructions are executed by the at least one processor, the human-machine interaction method is performed.

According to another aspect of the disclosure, a non-transitory computer-readable storage medium having computer instructions stored thereon is provided. The computer instructions are configured to cause a computer to perform the human-machine interaction method.

According to another aspect of the disclosure, a computer program product including computer programs is provided. When the computer programs are executed by a processor, the human-machine interaction method is performed.

It should be understood that the content described in this section is not intended to identify key or important features of embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solutions and do not constitute a limitation to the disclosure, in which:
FIG. 1 is a flowchart of a human-machine interaction method according to a first embodiment of the disclosure.
FIG. 2 is a flowchart of a human-machine interaction method according to a second embodiment of the disclosure.
FIGS. 3-21 are example diagrams of a human-machine interaction method according to a second embodiment of the disclosure.
FIG. 22 is a flowchart of a human-machine interaction method according to a third embodiment of the disclosure.
FIG. 23 is a block diagram of a human-machine interaction apparatus according to a fourth embodiment of the disclosure.
FIG. 24 is a block diagram of a human-machine interaction apparatus according to a fifth embodiment of the disclosure.
FIG. 25 is a block diagram of an electronic device for implementing a human-machine interaction method according to an embodiment of the disclosure.

### DETAILED DESCRIPTION

The following describes embodiments of the disclosure with reference to the drawings, which includes various details of embodiments of the disclosure to facilitate understanding and shall be considered merely exemplary. Therefore, those of ordinary skill in the art should recognize that various changes and modifications can be made to embodiments described herein without departing from the scope and spirit of the disclosure. For clarity and conciseness, descriptions of well-known functions and structures are omitted in the following description.

It can be understood that with the rapid development and popularization of automotive electronics, there are more and more control functions in automobiles. Currently, an interaction method commonly used for controlling various functions inside and outside a vehicle cabin is a click and touch interaction of keys (such as central control keys, steering wheel keys and cabin door keys) combined with options on a touch screen. Although this interaction method can realize a direct control of various functions of the vehicle, a driver is required to look away from the road ahead during an operation to find a position of a touch key and select the key, which may cause great potential safety hazards to a driving process.

In view of the above problem, the disclosure provides a human-machine interaction method. According to the human-machine interaction method, a target controlled object corresponding to a first gesture in a first area of a touch pad is determined in response to detecting the first gesture in the first area. A target control mode corresponding to a second gesture in a second area of the touch pad is determined in response to detecting the second gesture in the second area. The target controlled object is controlled based on the target control mode. Thus, the target controlled object is controlled according to detected gestures in different areas of the touch pad, so that the driver's sight line does not have to leave the road ahead and functions of the vehicle can be controlled only by finger actions, which improves the driving safety.

A human-machine interaction method, a human-machine interaction apparatus, an electronic device, a non-transitory computer-readable storage medium and a computer program product of embodiments of the disclosure are described below with reference to the drawings.

It should be noted that the disclosure relates to the field of AI technologies, and especially to the field of automatic driving technologies and intelligent transportation technologies.

AI is a subject that studies to enable computers to simulate certain human thinking processes and intelligent behaviors (such as learning, reasoning, thinking and planning), which has both hardware-level technologies and software-level technologies. The AI hardware technologies generally include technologies such as sensor, special AI chip, cloud computing, distributed storage and big data processing. The AI software technologies mainly include such as computer vision, speech recognition technology, natural language processing technology and machine learning/deep learning, big data processing technology and knowledge map technology.

Automatic driving refers to an auxiliary driving system that assists a driver to turn and keep driving on the road, and realizes a series of operations such as following, braking and lane changing. The driver can control the vehicle at any time, and the system will remind the driver to intervene to take control in some specific environments.

Intelligent transportation is a real-time, accurate and efficient comprehensive transportation management system that operates in a wide range and in all directions, which effectively integrates an advanced information technology, a data communication transmission technology, an electronic sensing technology, a control technology and a computer technology into a whole ground traffic management system. Intelligent transportation includes a traffic information service system and a traffic management system.

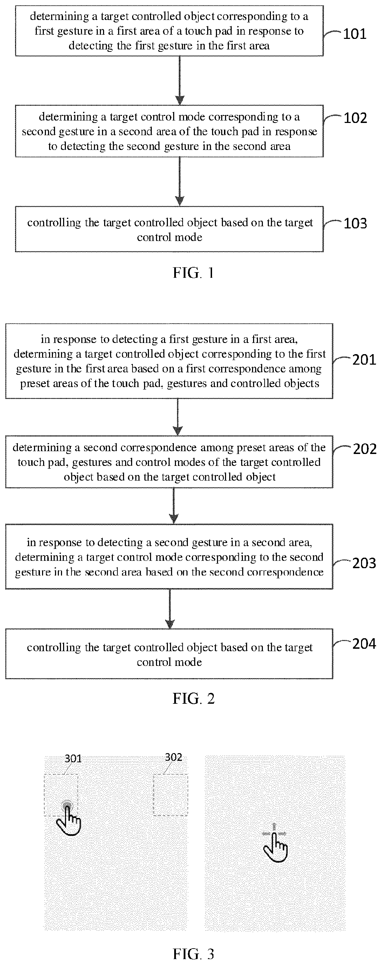

Firstly, the human-machine interaction method of the disclosure is described in detail in combination with FIG. 1.

FIG. 1 is a flowchart of a human-machine interaction method according to a first embodiment of the disclosure. It should be noted that the human-machine interaction method of embodiments of the disclosure is implemented by a human-machine interaction apparatus. The human-machine interaction apparatus can be an electronic device or can be configured in the electronic device to control a target controlled object according to detected gestures in different areas of a touch pad, so that the driver's sight line does not have to leave the road ahead and functions of the vehicle can be controlled only by finger actions, which improves the driving safety.

The electronic device can be any static or mobile computing device capable of data processing, for example a mobile computing device such as a laptop, a smart phone or a wearable device, or a static computing device such as a desktop computer, a server or a touch pad, which is not limited by the disclosure.

It should be noted that embodiments of the disclosure take the scene in which the driver uses the touch pad to control various functions in the vehicle as an example. The touch pad can include electrodes supporting multi-point touches, a pressure sensor sensing unit, a control unit, a storage unit and a connection interface. The human-machine interaction apparatus in embodiments of the disclosure can be understood as a control unit in the touch pad.

As illustrated in FIG. 1, the human-machine interaction method includes the following.

In 101, a target controlled object corresponding to a first gesture in a first area of a touch pad is determined in response to detecting the first gesture in the first area.

The first area can be any area of the touch pad, which is not limited by embodiments of the disclosure.

The first gesture can be any gesture such as double clicks by a single finger, drawing a triangle by a single finger, and a single click by three fingers. Embodiments of the disclosure does not limit a touch mode, a number of touch points and a trajectory corresponding to the first gesture. For example, the touch mode corresponding to the first gesture can be clicking, long pressing, dragging or the like. The number of touch points can be one (i.e., the driver makes a gesture with one finger), two (i.e., the driver makes a gesture with two fingers), three, four or five. The trajectory can be a triangle, a straight line or the like.

In embodiments of the disclosure, when the driver makes the first gesture in the first area of the touch pad, the electrodes and the pressure sensor sensing unit in the touch pad can detect the first gesture in the first area of the touch pad and output a signal to the control unit. The control unit can convert the obtained signal into coordinate values to generate trajectory information, and the target controlled object corresponding to the first gesture in the first area is determined according to the trajectory information.

The target controlled object is an object to be controlled, such as a rearview mirror, a skylight and other objects in the vehicle cabin, an air conditioner, video, lights and so on.

In 102, a target control mode corresponding to a second gesture in a second area of the touch pad is determined in response to detecting the second gesture in the second area.

The second area can be any area of the touch pad, which is not limited by embodiments of the disclosure.

The second gesture can be any gesture such as sliding upward with one finger, three clicks with one finger, and drawing an ellipse with one finger. Embodiments of the disclosure do not limit a touch mode, a number of touch points and a trajectory corresponding to the second gesture. For example, the touch mode corresponding to the second gesture can be clicking, long pressing, dragging or the like. The number of touch points can be one, two, three, four or five. The trajectory can be a triangle, a straight line or the like.

In embodiments of the disclosure, when the driver makes the second gesture in the second area of the touch pad, the electrodes and the pressure sensor sensing unit in the touch pad can detect the second gesture in the second area of the touch pad and output a signal to the control unit. The control unit can convert the obtained signal into coordinate values to generate trajectory information, and the target control mode corresponding to the second gesture in the second area is determined according to the trajectory information.

The target control mode refers to the mode of controlling the target controlled object, such as turning on the air conditioner, or turning off double flashing lights outside the vehicle.

In 103, the target controlled object is controlled based on the target control mode.

In embodiments of the disclosure, after the target controlled object and the target control mode are determined, the control unit of the touch pad can generate a control instruction according to the target controlled object and the target control mode, and send the control instruction to the target controlled object through the connection interface of the touch pad to control the target controlled object.

In practical application, the touch pad can be installed in the vehicle cabin, so as to control objects, an air conditioner, video, lights, software and an auxiliary driving function in the vehicle through the human-machine interaction method of embodiments of the disclosure. Thus, the driver's sight line does not have to leave the road ahead and the functions of the vehicle can be controlled only by finger actions, which improves the driving safety.

Controlling objects includes switching on or off vehicle body objects, such as adjusting the rearview mirrors, opening or closing the skylight, locking or unlocking, opening the hood or trunk cover, opening the fuel tank cover or opening the charging port cover.

Controlling the air conditioner includes controlling and adjusting various modes of the vehicle air conditioner, such as turning on or off the air conditioner, adjusting the temperature, adjusting the wind speed, selecting the wind direction mode, turning on or off the demisting control switch, turning on or off the internal and external air circulation, and turning on or off the air filtration.

Controlling video and audio includes controlling and adjusting functions of the in-vehicle video and audio system, such as play, pause, previous song, next song, fast forward, fast backward, loop, play in order, and random play.

Controlling lights includes controlling lighting modes inside and outside the vehicle, such as double flashing outside the vehicle, front and rear top lights in the vehicle cabin, and atmosphere lights and brightness.

Controlling software includes controlling the in-vehicle software to enable or disenable and common functions of the software, such as starting or exiting navigation, answering or hanging up incoming call, connecting or disconnecting Bluetooth, confirming function, canceling function, returning or exiting function.

Controlling the auxiliary driving function includes turning on the in-vehicle automatic auxiliary driving mode and function settings, such as pilot auxiliary driving and automatic parking.

In embodiments of the disclosure, in order to realize the convenient control of various functions in the vehicle, the touch pad can be installed at the convenient position for the driver in the vehicle cabin as required. For example, the touch pad can be installed in any one of the following positions of the vehicle: a right-hand console, a surface of a gear shifter, a trim on a left-hand front door and a center of a steering wheel. The right-hand console is located in the front of the storage box and in the front of the area where the driver's right forearm is naturally placed, and when the touch pad is installed on the right-hand console, it is convenient for the driver to use his idle right hand to control various functions of the vehicle in real time through the touch pad when driving with his left hand. The surface of the gear shifter is located at the top of the gear lever, and a certain area can be reserved at the top of the gear lever for installing the touch pad. By installing the touch pad on the surface of the shifter, it is convenient for the driver who is used to holding the shifter with his right hand to control various functions of the vehicle in real time through the touch pad. The trim on the left-hand front door is located in the front of the window lifting button and at the front of the natural placement area of the driver's left forearm. The touch pad is installed on the trim on the left-hand front door, which can facilitate the driver to use the idle left hand to control various functions of the vehicle in real time through the touch pad when driving with the right hand. The touch pad is installed under the vehicle logo or key area in the internal area of the multi-functional steering wheel, which can facilitate central control of the driver when driving with both hands, and is more suitable for the driver who is used to driving with both hands and has no habit of resting free hands.

The installation method of the touch pad can be that the hole for the touch pad is reserved on the shell at the installation position of the cabin, the touch pad is embedded in the hole, and the touch panel is fixed on the shell through a positioning column with a bracket provided with an extension part.

It can be understood that when the touch pad is installed at the convenient position for the driver in the vehicle cabin, a false touch on the touch pad may easily occur, and if the false touch occurs frequently, the driver may be bothered. The human-machine interaction method in embodiments of the disclosure essentially divides the control of the controlled object into two stages. In the first stage, the target controlled object is determined according to the detected first gesture in the first area of the touch pad. At this time, the trigger mode of the target controlled object can be entered. In the second stage, the target control mode is determined according to the detected second gesture in the second area of the touch pad, and then the target controlled object is controlled according to the target control mode. Therefore, even if the driver touches the touch pad by mistake, it will not cause the mis-operation of various functions in the vehicle, so as to avoid the frequent occurrence of false touch.

According to the human-machine interaction method of the disclosure, the target controlled object corresponding to the first gesture in the first area of the touch pad is determined in response to detecting the first gesture in the first area. The target control mode corresponding to the second gesture in the second area of the touch pad is determined in response to detecting the second gesture in the second area. The target controlled object is controlled based on the target control mode. Thus, the target controlled object is controlled according to detected gestures in different areas of the touch pad, so that the driver's sight line does not have to leave the road ahead and functions of the vehicle can be controlled only by finger actions, which improves the driving safety.

It can be seen from the above analysis that in embodiments of the disclosure, the target controlled object can be determined according to the detected first gesture in the first area of the touch pad, and the target control mode can be determined according to the detected second gesture in the second area of the touch pad. The process of determining the target controlled object and the target control mode in the human-machine interaction method provided by the disclosure is further described in combination with FIG. 2.

FIG. 2 is a flowchart of a human-machine interaction method according to a second embodiment of the disclosure. As illustrated in FIG. 2, the human-machine interaction method includes the following.

In 201, in response to detecting a first gesture in a first area, a target controlled object corresponding to the first gesture in the first area is determined based on a first correspondence among preset areas of the touch pad, gestures and controlled objects.

In embodiments of the disclosure, the first correspondence among preset areas of the touch pad, gestures and controlled objects can be preset, so that after the first gesture in the first area of the touch pad is detected, the target controlled object corresponding to the first gesture in the first area can be determined by querying the first correspondence. The first correspondence can be set arbitrarily as needed.

It should be noted that in practical application, the human-machine interaction apparatus may detect the first gesture in the first area of the touch pad due to a false touch or a wrong gesture memorized by the driver. After detecting this first gesture in the first area of the touch pad, the human-machine interaction apparatus queries the first correspondence and determines that there is no controlled object corresponding to the first gesture in the first area. At this time, the driver can be prompted to re-input the gesture to guide the driver to correctly control various functions of the vehicle.

In embodiments of the disclosure, the driver can be prompted to re-input the gesture through at least one of: a single long vibration of the touch pad and in-vehicle voice broadcasting.

In addition, the touch pad can be connected with the display screen. The display screen can be the central control display screen or other display screens, and the connection mode can be a controller area network (CAN) bus connection or other connection modes, so that when determining that there is no controlled object corresponding to the first gesture in the first area according to the first correspondence, the prompt information of re-inputting the gesture is displayed on the display screen. In order to distinguish from other prompt information, the prompt information herein can be called the fourth prompt information.

When the fourth prompt information of re-inputting the gesture is displayed through the display screen, the prompt message of false gesture can be displayed in the form of text, and the gesture and area corresponding to each controlled object can also be displayed in the form of animation, which is not limited in embodiments of the disclosure.

In 202, a second correspondence among preset areas of the touch pad, gestures and control modes of the target controlled object is determined based on the target controlled object.

In 203, in response to detecting a second gesture in a second area, a target control mode corresponding to the second gesture in the second area is determined based on the second correspondence.

In embodiments of the disclosure, the correspondence among preset areas of the touch pad, gestures and control modes can be set for each controlled object in advance, so that after the target controlled object is determined, the second correspondence can be determined according to the target controlled object. Further, after detecting the second gesture in the second area of the touch pad, the target control mode corresponding to the second gesture in the second area can be determined according to the second correspondence. The second correspondence can be set arbitrarily as needed.

For example, suppose that for the rearview mirror, it is set in advance that the angle of the rearview mirror is adjusted accordingly by sliding with one finger in any area of the touch pad; for the hood, the hood is opened accordingly by sliding upward with one finger in any area of the touch pad; for the trunk cover, the trunk cover is opened accordingly by sliding upward with one finger in any area of the touch pad. After determining that the target controlled object is the trunk cover, the second correspondence among preset areas of the touch pad, gestures and control modes of the trunk cover can be determined. Further, after detecting the second gesture of sliding upward with one finger in any area of the touch pad, it is determined that the target control mode corresponding to the second gesture of sliding upward with one finger in any area is opening the trunk cover according to the second correspondence among preset areas of the touch pad, gestures and control modes of the trunk cover.

It should be noted that 202 can also be executed after detecting the second gesture in the second area of the touch pad, and embodiments of the disclosure do not limit the execution time of 202.

It should be noted that in practical application, the human-machine interaction apparatus may detect the second gesture in the second area of the touch pad due to a false touch or a wrong gesture memorized by the driver, the human-machine interaction apparatus queries the second correspondence among preset areas of the touch pad, gestures and control modes of the target controlled object and determines that there is no control mode corresponding to the second gesture in the second area. At this time, the driver can be prompted to re-input the gesture to guide the driver to correctly control various functions of the target controlled object of the vehicle.

In embodiments of the disclosure, the driver can be prompted to re-input the gesture through at least one of: the single long vibration of the touch pad and voice broadcasting, or the prompt information of re-inputting the gesture can be displayed through the display screen. In order to distinguish from other prompt information, the prompt information herein can be called the fifth prompt information.

When the fifth prompt information of re-inputting the gesture is displayed through the display screen, the prompt message of gesture error can be displayed in the form of text, and the gesture and area corresponding to each control mode of the target controlled object can also be displayed in the form of animation, which is not limited to embodiments of the disclosure.

In embodiments of the disclosure, when it is determined that the number of times that there is no controlled object corresponding to the first gesture in the first area does not exceed a preset number threshold, or it is determined that the number of times that there is no control mode corresponding to the second gesture in the second area does not exceed a preset number threshold, the prompt message of gesture error can be further displayed and the control of the target controlled object at this time can be exited. The preset number threshold can be set as required.

In embodiments of the disclosure, the driver can be prompted for gesture error through at least one of: double long vibrations of the touch pad and voice broadcasting.

It can be understood that the human-machine interaction method of embodiments of the disclosure determines the target controlled object and the target control mode of the target controlled object in combination with the gesture and the corresponding area of the touch pad corresponding to the gesture, so that different controlled objects can be controlled or different controls in the same controlled object may be realized through the same gesture in different areas of the touch pad or different gestures in the same area. Compared with the human-machine interaction method that only determines the target controlled object and target control mode through the gesture, the driver needs to remember fewer gestures. Moreover, by setting the first correspondence among preset areas of the touch pad, gestures and controlled objects and the second correspondence among preset areas of the touch pad, gestures and control modes of each controlled object, the same gesture can be used to control different controlled objects. For example, for the hood, the gesture of sliding upward with one finger is used to open the hood, and for the air conditioner, the air conditioner is turned on by upward with sliding one finger, thus the gestures that needs to be remembered may be further reduced, and the flexibility of controlling each controlled object is improved.

In 204, the target controlled object is controlled based on the target control mode.

The specific implementation process and principle of 204 can refer to the description of the above embodiments, which will not be repeated herein.

It should be noted that for some controlled objects, the target control mode of the target controlled object is determined according to the second gesture in the second area of the touch pad. After the target controlled object is controlled according to the target control mode, it may be necessary to further adjust the target controlled object. For example, for the skylight, after the skylight is fully opened according to the second gesture in the second area of the touch pad, the opening degree of the skylight may be further adjusted. Then, in embodiments of the disclosure, in response to detecting a third gesture in a third area of the touch pad, a third correspondence among preset areas of the touch pad, gestures and parameter adjustment modes of the target controlled object can be determined according to the target controlled object. The parameter adjustment mode corresponding to the third gesture in the third area can be determined according to the third correspondence, and then according to the parameter adjustment mode, a parameter of the target controlled object may be adjusted.

In addition, for some controlled objects with relatively simple functions, in order to conveniently control the controlled objects, in embodiments of the disclosure, the target controlled object and the target control mode can be determined only through a detected gesture in a certain area of the touch pad, and then the target controlled object can be controlled according to the target control mode.

Next, with reference to FIGS. 3-21, the first correspondence among preset areas of the touch pad, gestures and controlled objects, the second correspondence among preset areas of the touch pad, gestures and controls modes of the controlled object and the third correspondence among preset areas of the touch pad, gestures and parameter adjustment modes of the controlled object are illustrated.

As illustrated in FIG. 3, as shown in the left figure of FIG. 3, double clicking the area 301 of the touch pad with one finger to control the corresponding controlled object, i.e., the left rearview mirror. As shown in the left figure of FIG. 3, double clicking the area 302 of the touch pad with one finger to control the corresponding controlled object, i.e., the right rearview mirror. For the left or right rearview mirror, as shown in the right figure of FIG. 3, the angle and direction of the rearview mirror can be adjusted by sliding in any area of the touch pad using one finger.

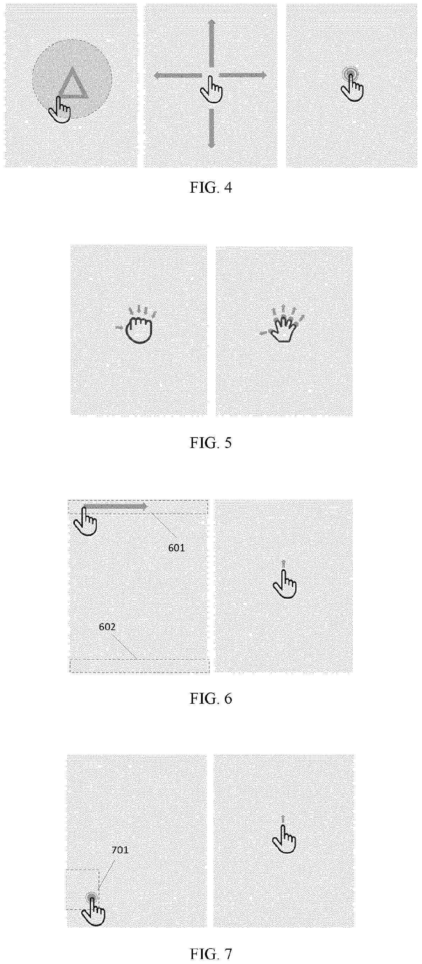

As illustrated in FIG. 4, as shown in the left figure of FIG. 4, a triangle can be drawn with one finger in the circular area in the center of the touch pad to control the corresponding controlled object, i.e., the skylight. For the skylight, as shown in the middle figure of FIG. 4, the opening or closing of the skylight is controlled by sliding with one finger in any area of the touch pad. The inclined opening of the skylight is controlled by sliding upward with one finger in any area of the touch pad. The inclined closing of the skylight is controlled by sliding downward with one finger in any area of the touch pad. The skylight is fully closed when sliding one finger to the left in any area of the touch pad. The skylight is fully opened when sliding one finger to the right in any area of the touch pad. For the skylight, as shown in the right figure of FIG. 4, the opening degree of the skylight is adjusted accordingly by pressing and holding with one finger in any area of the touch pad.

As illustrated in FIG. 5, as shown in the left figure of FIG. 5, grasping five fingers inward in any area of the touch pad corresponds to the controlled object of the door lock, and the control mode of locking. Moreover, as illustrated in FIG. 5, extending five fingers outward in any area of the touch pad corresponds to the controlled object of the door lock, and the control mode of unlocking.

As illustrated in FIG. 6, as shown in the left figure of FIG. 6, the corresponding controlled object of the engine cover is controlled by sliding laterally from left to right of the area 601 of the touch pad with one finger. As shown in the left figure of FIG. 6, the corresponding controlled object of the trunk cover is controlled by sliding laterally from left to right of the area 602 of the touch pad with one finger. For the engine cover or trunk cover, as shown in the right figure of FIG. 6, the engine cover or trunk cover is opened by sliding upward with one finger in any area of the touch pad.

As illustrated in FIG. 7, as shown in the left figure of FIG. 7, the corresponding controlled object of the tank cover or charging port cover is controlled by double clicking with one finger in the area 701 of the touch pad. For the tank cover or charging port cover, as shown in the right figure of FIG. 7, the corresponding controlled object of the tank cover or charging port cover is controlled by sliding upward with one finger in any area of the touch pad.

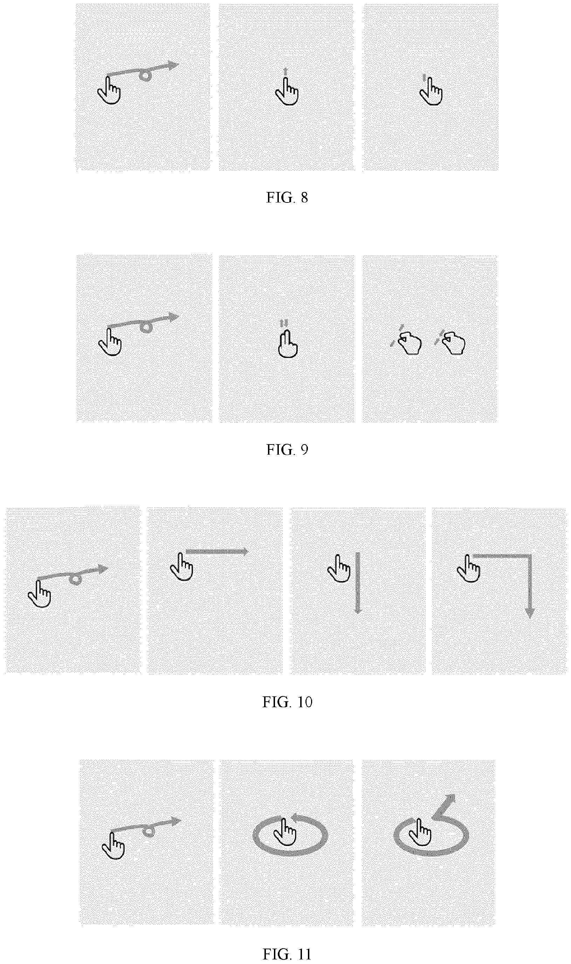

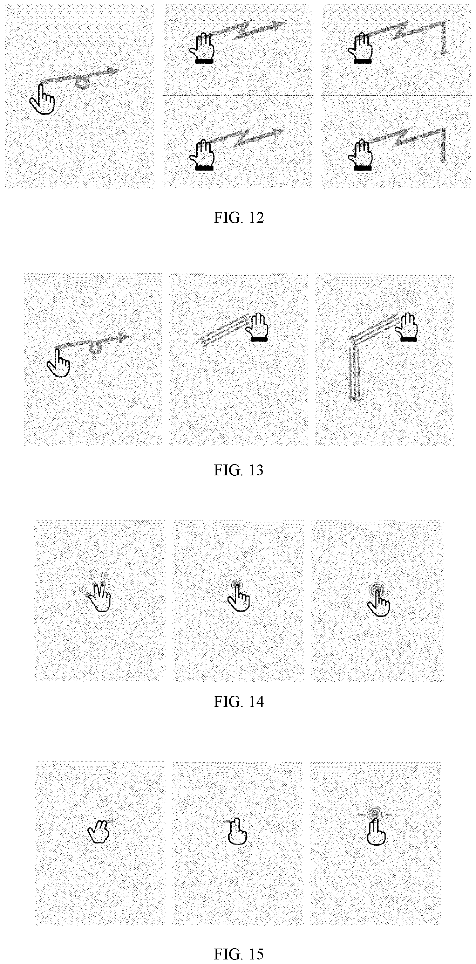

As illustrated in FIGS. 8-13, as shown in the left figure of FIGS. 8-13, the corresponding controlled object of the air conditioner is controlled by sliding a gyratory curve with one finger to the right in any area of the touch pad. For the air conditioner, as shown in the middle figure of FIG. 8, the air conditioner is turned on by sliding upward with one finger in any area of the touch pad. As shown in the right figure of FIG. 8, the air conditioner is turned off by sliding downward with one finger in any area of the touch pad. As shown in the middle figure of FIG. 9, the temperature is increased by sliding upward with two fingers in any area of the touch pad, and the temperature is decreased by sliding downward with two fingers in any area of the touch pad. As shown in the right figure of FIG. 9, two fingers (such as thumb and index finger) are extended outward in any area of the touch pad to increase the wind speed, and the two fingers are narrowed inward in any area of the touch pad to reduce the wind speed. As shown in the second figure of FIG. 10, the forward air outlet is opened by sliding to the right with one finger for a certain distance in any area of the touch pad. As shown in the third figure of FIG. 10, the downward air outlet is opened by sliding downward with one finger for a certain distance in any area of the touch pad. As shown in the fourth figure of FIG. 10, the multidirectional air outlet is opened by sliding to the right for a certain distance with one finger in any area of the touchpad, and then sliding downward for a certain distance with one finger. As shown in the middle figure of FIG. 11, an elliptical trajectory is drawn with one finger in any area of the touch pad to start the internal circulation of the in-vehicle air conditioner. As shown in the right figure of FIG. 11, an elliptical trajectory is drawn with one finger in any area of the touch pad and extended outward to turn off the internal circulation of the in-vehicle air conditioner. As shown in the middle figure of FIG. 12, a bending straight line is drawn by sliding with three fingers to the right in the upper half area of the touch pad, to turn on the front windshield defogging. As shown in the middle figure of FIG. 12, a bending straight line is drawn by sliding with three fingers to the right in the lower half area of the touch pad, to turn on the rear windshield defogging. As shown in the right figure of FIG. 12, a bending straight line is drawn by sliding with three fingers to the right in the upper half area of the touch pad and sliding downward for a certain distance, to turn off the front windshield defogging. As shown in the right figure of FIG. 12, a bending straight line is drawn by sliding with three fingers to the right in the lower half area of the touch pad and sliding downward for a certain distance, to turn off the rear windshield defogging. As shown in the middle figure of FIG. 13, cabin air filtration is turned on by sliding downward inclined to the left for a certain distance with three fingers in any area of the touch pad. As shown in the right figure of FIG. 13, cabin air filtration is turned off by sliding downward inclined to the left for a certain distance with three fingers in any area of the touch pad and then sliding downward for a certain distance.

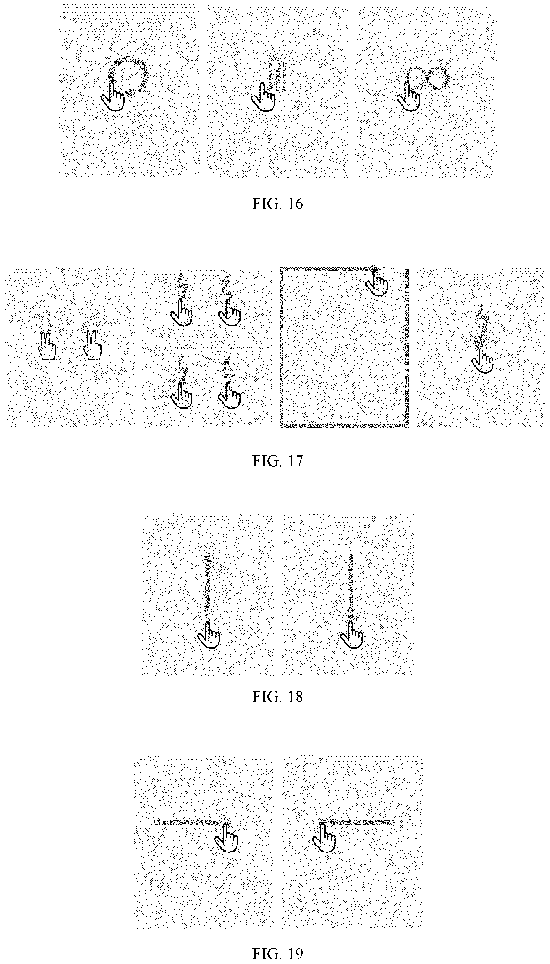

As illustrated in FIG. 14, as shown in the left figure of FIG. 14, the corresponding controlled object of video is controlled by single clicking with three fingers respectively in turn (for example, in the order of thumb, index finger, and middle finger) in any area of the touch pad. For the video, as shown in the middle figure of FIG. 14, playback is started by double clicking with one finger in any area of the touch pad. As shown in the right figure of FIG. 14, playback is paused by clicking three times with one finger in any area of the touch pad. In the video playback mode, as shown in the left figure of FIG. 15, two fingers are controlled to slide to the right in any area of the touch pad to switch to the next playback. In the video playback mode, as shown in the middle figure of FIG. 15, two fingers are controlled to slide to the left in any area of the touch pad to switch to the previous playback. In the video playback mode, as shown in the right figure of FIG. 15, two fingers are pressed in any area of the touch pad for 2 seconds and then slide slowly to the right to fast forward the playback. In the video playback mode, as shown in the right figure of FIG. 15, two fingers are pressed in any area of the touch pad for 2 seconds and then slide slowly to the left to fast backward the playback. In the video playback mode, as shown in the left figure of FIG. 16, one finger draws a circle in any area of the touch pad to circularly play a single song. In the video playback mode, as shown in the middle figure of FIG. 16, one finger slides downward for three times in any area of the touch pad to play a corresponding list in sequence. In the video playback mode, as shown in the right figure of FIG. 16, one finger draws an infinite symbol in any area of the touch pad to play the corresponding list randomly.

As illustrated in FIG. 17, as shown in the first figure of FIG. 17, the index finger and middle finger are used to each click for two times by switching between two fingers in any area of the touch pad (i.e., in the order of index finger, middle finger, index finger, and middle finger), to turn on the double flash. As shown in the first figure of FIG. 17, the index finger and middle finger are used to each click for two times by switching between two fingers in any area of the touch pad (i.e., in the order of middle finger, index finger, middle finger and index finger), to turn off the double flash. As shown in the second figure of FIG. 17, one finger draws a lightning trajectory from top to bottom in the upper half of the touch pad, to turn on the front top light. As shown in the second figure of FIG. 17, one finger draws a lightning trajectory from bottom to top in the upper half of the touch pad, to turn off the front top light. As shown in the second figure of FIG. 17, one finger draws a lightning trajectory from top to bottom in the lower half of the touch pad, to turn on the rear top light. As shown in the second figure of FIG. 17, one finger draws a lightning trajectory from bottom to top in the lower half of the touch pad, to turn off the rear top light. As shown in the third figure of FIG. 17, a full circle is drawn clockwise around the touch pad in the edge area of the touch pad to turn on the atmosphere lamp, and a full circle is drawn counterclockwise around the touch pad in the edge area of the touch pad to turn off the atmosphere lamp. After turning on the light, as shown in the fourth figure of FIG. 17, the light is lightened at the end of the gesture, by pressing for 2 seconds and then sliding slowly to the right. After turning on the light, as shown in the fourth figure of FIG. 17, the light is darkened at the end of the gesture, by pressing for 2 seconds and then sliding slowly to the left.

As illustrated in FIG. 18, as shown in the left figure of FIG. 18, one finger slides upward and double clicks at the end of the trajectory in any area of the touch pad to start the navigation. As shown in the right figure of FIG. 18, one finger slides down and double clicks at the end of the trajectory in any area of the touch pad to exit the navigation.

As illustrated in FIG. 19, as shown in the left figure of FIG. 19, one finger slides to the right and double clicks at the end of the trajectory in any area of the touch pad to connect the Bluetooth connection. As shown in the right figure of FIG. 19, one finger slides to the left and double clicks at the end of the trajectory in any area of the touch pad to disconnect the Bluetooth connection.

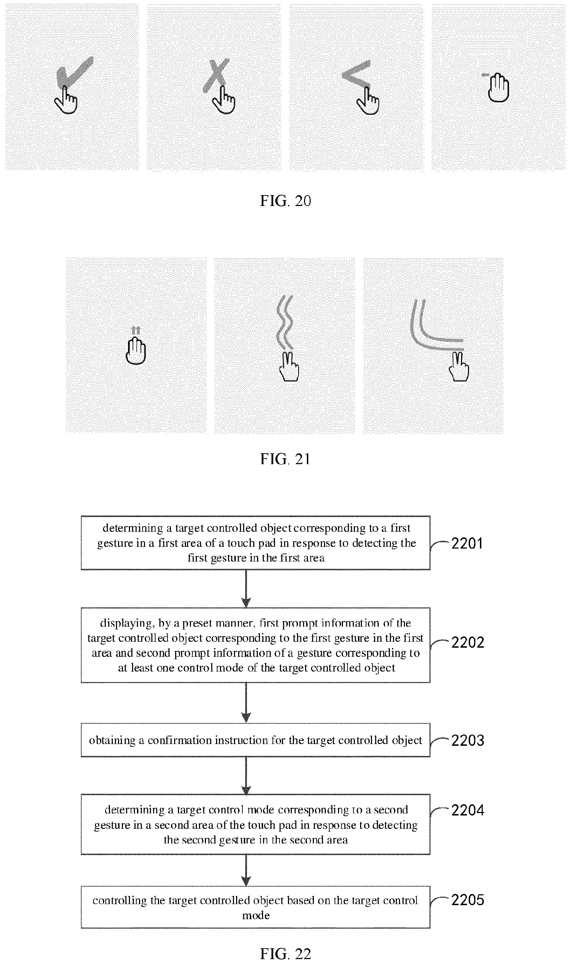

As illustrated in FIG. 20, for a function, as shown in the first figure of FIG. 20, one finger draws a hook sign in any area of the touch pad to confirm the selection. As shown in the second figure of FIG. 20, one finger draws a fork sign in any area of the touch pad to cancel the selection. As shown in the third figure of FIG. 20, one finger makes a "<" sign in any area of the touch pad, to return to the previous page or previous term. As shown in the fourth figure of FIG. 20, four fingers slide to the left in any area of the touch pad, to enable an exit function to the home page. For incoming call answering, the same gesture as the function confirmation gesture shown in the first figure of FIG. 20 can be used. For hanging up incoming call or call, the same gesture as the function cancellation gesture shown in the second figure of FIG. 20 can be used.

As illustrated in FIG. 21, as shown in the left figure of FIG. 21, four fingers move upward twice in any area of the touch pad to turn on the auxiliary driving function. As shown in the middle figure of FIG. 21, two fingers draw double wavy lines forward in any area of the touch pad to the start pilot assisted driving. As shown in the right figure of FIG. 21, two fingers draw right angles with double lines from top to bottom and then to the right in any area of the touch pad to start the automatic parking function.

According to gestures corresponding to each controlled object and gestures corresponding to each control mode and parameter adjustment mode of each controlled object, in embodiments of the disclosure, the same gesture can be used to control different controlled objects, so as to reduce gestures that the driver needs to remember. For example, for the rearview mirror, one finger slides in any area of the touch pad to control the angle of the rearview mirror. For the skylight, one finger slides in any area of the touch pad to control the opening or closing of the skylight. For the trunk cover or engine cover, one finger slides in any area of the touch pad to open the trunk cover or engine cover. For the air conditioner, one finger slides in any area of the touch pad to turn on the air conditioner.

Assuming that the human-machine interaction apparatus detects the gesture of drawing the gyratory curve to the right in any area of the touch pad, the target controlled object is the air conditioner, and the correspondence among preset areas of the touch pad, gestures and control modes of the air conditioner is determined. Then, after detecting the gesture of sliding upward with one finger in any area of the touch pad, the control mode is determined to be turning on the air conditioner, thus the air conditioner can be controlled to be turned on.

According to the human-machine interaction method of embodiments of the disclosure, in response to detecting the first gesture in the first area of the touch pad, the target controlled object corresponding to the first gesture in the first area is determined according to the first correspondence among the preset areas of the touch pad, gestures and controlled objects. The second correspondence among the preset areas of the touch pad, gestures and control modes of the target controlled object is determined according to the target controlled object. In response to detecting the second gesture in the second area of the touch pad, the target control mode corresponding to the second gesture in the second area is determined according to the second correspondence. Then, the target controlled object is controlled according to the target control mode. Thus, the target controlled object is controlled according to detected gestures in different areas of the touch pad, so that the driver's sight line does not have to leave the road ahead and functions of the vehicle can be controlled only by the action of fingers, which improves the driving safety.

It can be seen from the above analysis that the control process of the controlled object can be divided into two stages in embodiments of the disclosure. Firstly, the target controlled object can be determined according to the detected first gesture in the first area of the touch pad. Then the target control mode of the target controlled object can be determined according to the detected second gesture in the second area of the touch pad. In practical application, it may occur that after the first gesture in the first area of the touch pad is detected, the second gesture in the second area of the touch pad may not be detected. The human-machine interaction method provided by the disclosure is further described below in combination with FIG. 22.

FIG. 22 is a flowchart of a human-machine interaction method according to a third embodiment of the disclosure. As illustrated in FIG. 22, the human-machine interaction method may include the following.

In 2201, a target controlled object corresponding to a first gesture in a first area of a touch pad is determined in response to detecting the first gesture in the first area.

The specific implementation process and principle of 2201 can refer to the description of the above embodiments, which will not be repeated herein.

In 2202, first prompt information of the target controlled object corresponding to the first gesture in the first area and second prompt information of a gesture corresponding to at least one control mode of the target controlled object are displayed by a preset manner.

In 2203, a confirmation instruction for the target controlled object is obtained.

In 2204, a target control mode corresponding to a second gesture in a second area of the touch pad is determined in response to detecting the second gesture in the second area.

In embodiments of the disclosure, after determining the target controlled object corresponding to the first gesture in the first area, the trigger mode of the target controlled object is entered, and the driver is informed of the target controlled object corresponding to the first gesture in the first area through at least one of: double vibrations of the touch pad and the in-vehicle voice broadcasting, so that the driver knows that the first gesture in the first area of the touch pad has been correctly responded. In order to distinguish from other prompt information, the prompt message herein can be called the first prompt information. The second prompt information of the gesture corresponding to at least one control mode of the target controlled object can also be displayed through voice broadcasting, so as to guide the driver to control the target controlled object with the correct gesture. For example, when the target controlled object is the hood, the message "please slide one finger upward in any area of the touch pad to open the hood, or slide downward in any area of the touch pad to close the hood" is broadcasted through voice to guide the driver to control the hood with the correct gesture.

In embodiments of the disclosure, the touch pad can be connected with the display screen. The display screen can be the central control display screen or other display screens, and the connection mode can be the CAN bus connection or other connection modes. Therefore, after determining the target controlled object corresponding to the first gesture in the first area, the first prompt information and the second prompt information can be displayed through the display screen, so that the driver can intuitively understand the current controlled object and what gesture is used to control the target controlled object.

When the first prompt information and the second prompt information are displayed through the display screen, the first prompt information and the second prompt information can be displayed in the form of text, or the first prompt information and the second prompt information can be displayed in the form of animation, which is not limited to this disclosure.

In embodiments of the disclosure, after displaying the first prompt information of the target controlled object corresponding to the first gesture in the first area, the human-machine interaction apparatus can determine the target control mode corresponding to the second gesture in the second area in response to detecting the second gesture in the second area of the touch pad after obtaining the confirmation instruction for the target controlled object. Therefore, it may avoid that the wrong controlled object is controlled according to the target control mode corresponding to the second gesture in the second area in response to the error of the target controlled object determined by the human-machine interaction apparatus, so as to improve the control accuracy of various functions in the vehicle.

The confirmation instruction for the target controlled object can be the confirmation instruction issued by the driver through voice, or the confirmation instruction triggered by the driver through the specific gesture in the specific area of the touch pad. For example, the driver draws the hook in any area of the touch pad to confirm that the target controlled object is correct, or the confirmation instruction is triggered in other forms which is not limited in embodiments of the disclosure.

In embodiments of the disclosure, it may also occur that after the driver inputs the first gesture in the first area of the touch pad, the driver does not further input the gesture on the touch pad due to the error of the target controlled object or other temporary events. In view of the above situation, in embodiments of the disclosure, third prompt information of inputting a gesture can be displayed in response to not detecting the second gesture in the second area of the touch pad within a first preset period of time after the first prompt information and the second prompt information are displayed through the display screen, so as to guide the driver to correctly control the target controlled object. The display screen is controlled to exit an interface displaying the first prompt information and the second prompt information, in response to not detecting the second gesture of the second area of the touch pad within a second preset period of time after displaying the third prompt information of inputting the gesture.

The first preset period of time and the second preset period of time can be set as needed. For example, both the first preset period of time and the second preset period of time can be set to 5 seconds.

In embodiments of the disclosure, in response to not detecting the second gesture in the second area of the touch pad within the first preset period of time, the driver can be prompted to input the gesture through at least one of: a single vibration of the touch pad and in-vehicle voice broadcasting, or the prompt information of inputting the gesture can be displayed through the display screen to guide the driver to correctly control the target controlled object. In order to distinguish from other prompt information, the prompt information here can be called the third prompt information.

In response to not detecting the second gesture in the second area of the touch pad within the second preset period of time after displaying the third prompt information of inputting the gesture, the trigger mode of exiting the target controlled object can be controlled, the exit prompt can be made in the form of voice broadcasting, and the display screen can be controlled to exit the interface displaying the first prompt information and the second prompt information.

In embodiments of the disclosure, after determining the target control mode of the target controlled object, the driver is informed that the second gesture in the second area has been correctly responded by means of a single vibration of the touch pad, voice broadcasting, or displaying through display screen.

In 2205, the target controlled object is controlled based on the target control mode.

In embodiments of the disclosure, in response to the fact that no gesture is detected within the third preset period of time after the target controlled object is controlled according to the target control mode, sixth prompt information for exiting the current function control can be displayed. The third preset period of time can be set as needed.

In embodiments of the disclosure, the sixth prompt information for exiting the current function control can be displayed through at least one of double vibrations of the touch pad, and voice broadcasting. In addition, after exiting the current control, the display screen can stay on the control interface of the target controlled object, to facilitate the driver to further control the target controlled object.

According to the human-machine interaction method of embodiments of the disclosure, the target control object corresponding to the first gesture in the first area is determined in response to detecting the first gesture in the first area of the touch pad. The first prompt information of the target controlled object corresponding to the first gesture in the first area and the second prompt information of the gesture corresponding to at least one control mode of the target controlled object are displayed by the preset manner. The confirmation instruction for the target controlled object is obtained. The target control mode corresponding to the second gesture in the second area of the touch pad is determined in response to detecting the second gesture in the second area. The target controlled object is controlled based on the target control mode. Thus, the target controlled object is controlled according to detected gestures in different areas of the touch pad, so that the driver's sight line does not have to leave the road ahead and functions of the vehicle can be controlled only by finger actions, which improves the driving safety.

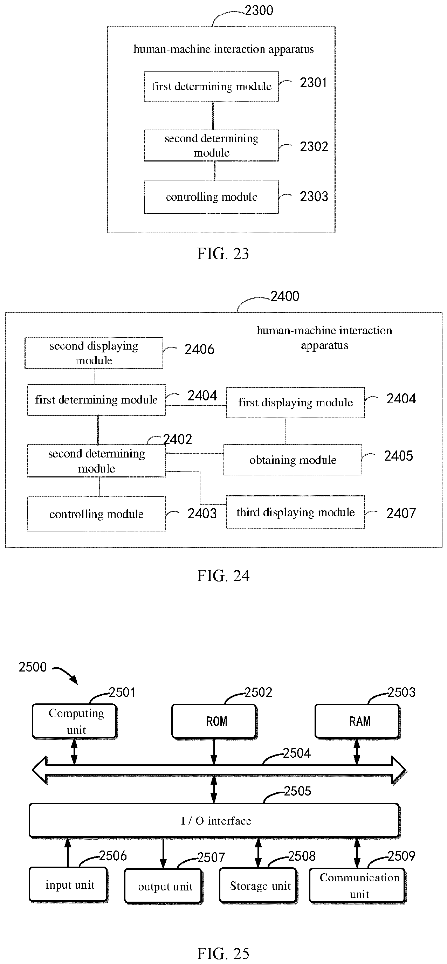

The human-machine interaction apparatus of the disclosure will be described in combination with FIG. 23.

FIG. 23 is a block diagram of a human-machine interaction apparatus according to a fourth embodiment of the disclosure.

As illustrated in FIG. 23, the human-machine interaction apparatus 2300 of the disclosure includes: a first determining module 2301, a second determining module 2302 and a controlling module 2303.

The first determining module 2301 is configured to determine a target controlled object corresponding to a first gesture in a first area of a touch pad in response to detecting the first gesture in the first area.

The second determining module 2302 is configured to determine a target control mode corresponding to a second gesture in a second area of the touch pad in response to detecting the second gesture in the second area.

The controlling module 2303 is configured to control the target controlled object based on the target control mode.

It should be noted that the human-machine interaction apparatus 2300 of embodiments can execute the human-machine interaction method of the above embodiments. The human-machine interaction apparatus can be an electronic device or can be configured in the electronic device to control the target controlled object according to detected gestures in different areas of the touch pad, so that the driver's sight line does not have to leave the road ahead and functions of the vehicle can be controlled only by finger actions, which improves the driving safety.

An electronic device can be any static or mobile computing device capable of data processing, for example a mobile computing device such as a laptop, a smart phone and a wearable device, or a static computing device such as a desktop computer, or a server, or a touch pad, which is not limited by the disclosure.

It should be noted that the foregoing description of embodiments of the human-machine interaction method is also applicable to the human-machine interaction apparatus of the disclosure, which will not be repeated herein.

With the human-machine interaction apparatus of the disclosure, the target controlled object corresponding to the first gesture in the first area of the touch pad is determined in response to detecting the first gesture in the first area. The target control mode corresponding to the second gesture in the second area of the touch pad is determined in response to detecting the second gesture in the second area. The target controlled object is controlled based on the target control mode. Thus, the target controlled object is controlled according to detected gestures in different areas of the touch pad, so that the driver's sight line does not have to leave the road ahead and functions of the vehicle can be controlled only by finger actions, which improves the driving safety.

The human-machine interaction apparatus of the disclosure will be described in combination with FIG. 24.

FIG. 24 is a block diagram of a human-machine interaction apparatus according to a fifth embodiment of the disclosure.

As illustrated in FIG. 24, the human-machine interaction apparatus 2400 may include a first determining module 2401, a second determining module 2402 and a controlling module 2403. The first determining module 2401, the second determining module 2402 and the controlling module 2403 in FIG. 24 have the same function and structure as the first determining module 2301, the second determining module 2302 and the controlling module 2303 in FIG. 23.

In an embodiment of the disclosure, the first determining module 2401 includes: a first determining unit, configured to determine the target controlled object corresponding to the first gesture in the first area based on a first correspondence among preset areas of the touch pad, gestures and controlled objects.

In an embodiment of the disclosure, the second determining module 2402 includes: a second determining unit, configured to determine a second correspondence among preset areas of the touch pad, gestures and control modes of the target controlled object based on the target controlled object; and a third determining unit, configured to determine the target control mode corresponding to the second gesture in the second area based on the second correspondence.

In an embodiment of the disclosure, the human-machine interaction apparatus 2400 further includes: a first displaying module 2404, configured to display, by a preset manner, first prompt information of the target controlled object corresponding to the first gesture in the first area and second prompt information of a gesture corresponding to at least one control mode of the target controlled object.

In an embodiment of the disclosure, the human-machine interaction apparatus 2400 further includes: an obtaining module 2405, configured to obtain a confirmation instruction for the target controlled object.

In an embodiment of the disclosure, the touch pad is connected to a display screen, and the first displaying module 2404 includes: a first displaying unit, configured to display the first prompt information and the second prompt information through the display screen.

In an embodiment of the disclosure, the first displaying module 2404 further includes: a second displaying unit, configured to display third prompt information of inputting a gesture in response to not detecting the second gesture in the second area of the touch pad within a first preset period of time; and a controlling unit, configured to control the display screen to exit an interface displaying the first prompt information and the second prompt information, in response to not detecting the second gesture of the second area of the touch pad within a second preset period of time after displaying the third prompt information of inputting the gesture.

In an embodiment of the disclosure, the human-machine interaction apparatus 2400 further includes: a second displaying module 2406, configured to display fourth prompt information of re-inputting a gesture in response to determining that there is no controlled object corresponding to the first gesture in the first area based on the first correspondence.

In an embodiment of the disclosure, the human-machine interaction apparatus 2400 further includes: a third displaying module 2407, configured to display fifth prompt information of re-inputting a gesture in response to determining that there is no control mode corresponding to the second gesture in the second area based on the second correspondence.

In an embodiment of the disclosure, the touch pad is installed in any one of the following positions of a vehicle: a right-hand console, a surface of a gear shifter, a trim on a left-hand front door and a center of a steering wheel.

It should be noted that the foregoing description of embodiments of the human-machine interaction method is also applicable to the human-machine interaction apparatus of the disclosure, which will not be repeated herein.

With the human-machine interaction apparatus of the disclosure, the target controlled object corresponding to the first gesture in the first area of the touch pad is determined in response to detecting the first gesture in the first area. The target control mode corresponding to the second gesture in the second area of the touch pad is determined in response to detecting the second gesture in the second area. The target controlled object is controlled based on the target control mode. Thus, the target controlled object is controlled according to detected gestures in different areas of the touch pad, so that the driver's sight line does not have to leave the road ahead and functions of the vehicle can be controlled only by finger actions, which improves the driving safety.

According to embodiments of the disclosure, the disclosure also provides an electronic device, a readable storage medium and a computer program product.

FIG. 25 is a block diagram of an example electronic device 2500 used to implement the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 25, the device 2500 includes a computing unit 2501 performing various appropriate actions and processes based on computer programs stored in a read-only memory (ROM) 2502 or computer programs loaded from the storage unit 2508 to a random access memory (RAM) 2503. In the RAM 2503, various programs and data required for the operation of the device 2500 are stored. The computing unit 2501, the ROM 2502, and the RAM 2503 are connected to each other through a bus 2504. An input/output (I/O) interface 2505 is also connected to the bus 2504.

Components in the device 2500 are connected to the I/O interface 2505, including: an inputting unit 2506, such as a keyboard, a mouse; an outputting unit 2507, such as various types of displays, speakers; a storage unit 2508, such as a disk, an optical disk; and a communication unit 2509, such as network cards, modems, and wireless communication transceivers. The communication unit 2509 allows the device 2500 to exchange information/data with other devices through a computer network such as the Internet and/or various telecommunication networks.

The computing unit 2501 may be various general-purpose and/or dedicated processing components with processing and computing capabilities. Some examples of computing unit 2501 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 2501 executes the various methods and processes described above, such as the human-machine interaction method. For example, in some embodiments, the human-machine interaction method may be implemented as a computer software program, which is tangibly contained in a machine-readable medium, such as the storage unit 2508. In some embodiments, part or all of the computer program may be loaded and/or installed on the device 2500 via the ROM 2502 and/or the communication unit 2509. When the computer program is loaded on the RAM 2503 and executed by the computing unit 2501, one or more steps of the human-machine interaction method described above may be executed. Alternatively, in other embodiments, the computing unit 2501 may be configured to perform the human-machine interaction method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and the block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve the defects of difficult management and weak business scalability in the traditional physical host and virtual private server (VPS) service. The server can also be a server of distributed system or a server combined with block-chain.

According to the technical solutions of the disclosure, the target controlled object corresponding to the first gesture in the first area of the touch pad is determined in response to detecting the first gesture in the first area. The target control mode corresponding to the second gesture in the second area of the touch pad is determined in response to detecting the second gesture in the second area. The target controlled object is controlled based on the target control mode. Thus, the target controlled object is controlled according to detected gestures in different areas of the touch pad, so that the driver's sight line does not have to leave the road ahead and functions of the vehicle can be controlled only by finger actions, which improves the driving safety.

It should be understood that the various forms of processes shown above can be used to reorder, add or delete steps. For example, the steps described in the disclosure could be performed in parallel, sequentially, or in a different order, as long as the desired result of the technical solutions disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. A human-machine interaction method, comprising:
determining a target controlled object corresponding to a first gesture in a first area of a touch pad in response to detecting the first gesture in the first area;
determining a target control mode corresponding to a second gesture in a second area of the touch pad in response to detecting the second gesture in the second area; and
controlling the target controlled object based on the target control mode.

2. The method of claim 1, wherein determining the target controlled object corresponding to the first gesture in the first area of the touch pad in response to detecting the first gesture in the first area, comprises:
determining the target controlled object corresponding to the first gesture in the first area based on a first correspondence among preset areas of the touch pad, gestures and controlled objects.

3. The method of claim 1 or 2, wherein determining the target control mode corresponding to the second gesture in the second area of the touch pad in response to detecting the second gesture in the second area, comprises:
determining a second correspondence among preset areas of the touch pad, gestures and control modes of the target controlled object based on the target controlled object; and
determining the target control mode corresponding to the second gesture in the second area based on the second correspondence.

4. The method of claim 1 or 2, further comprising:
displaying, by a preset manner, first prompt information of the target controlled object corresponding to the first gesture in the first area and second prompt information of a gesture corresponding to at least one control mode of the target controlled object.

5. The method of claim 4, further comprising:
obtaining a confirmation instruction for the target controlled object.

6. The method of claim 4, wherein the touch pad is connected to a display screen; and
displaying, by the preset manner, the first prompt information of the target controlled object corresponding to the first gesture in the first area and the second prompt information of the gesture corresponding to the at least one control mode of the target controlled object, comprises:
displaying the first prompt information and the second prompt information through the display screen.

7. The method of claim 6, further comprising:
displaying third prompt information of inputting a gesture in response to not detecting the second gesture in the second area of the touch pad within a first preset period of time; and
controlling the display screen to exit an interface displaying the first prompt information and the second prompt information, in response to not detecting the second gesture of the second area of the touch pad within a second preset period of time after displaying the third prompt information of inputting the gesture.

8. The method of claim 2, further comprising:
displaying fourth prompt information of re-inputting a gesture in response to determining that there is no controlled object corresponding to the first gesture in the first area based on the first correspondence.

9. The method of claim 3, further comprising:
displaying fifth prompt information of re-inputting a gesture in response to determining that there is no control mode corresponding to the second gesture in the second area based on the second correspondence.

10. The method of any one of claims 1-9, wherein the touch pad is installed in any one of the following positions of a vehicle: a right-hand console, a surface of a gear shifter, a trim on a left-hand front door and a center of a steering wheel.

11. A human-machine interaction apparatus, comprising:
a first determining module, configured to determine a target controlled object corresponding to a first gesture in a first area of a touch pad in response to detecting the first gesture in the first area;
a second determining module, configured to determine a target control mode corresponding to a second gesture in a second area of the touch pad in response to detecting the second gesture in the second area; and
a controlling module, configured to control the target controlled object based on the target control mode.

12. The apparatus of claim 11, wherein the first determining module comprises:
a first determining unit, configured to determine the target controlled object corresponding to the first gesture in the first area based on a first correspondence among preset areas of the touch pad, gestures and controlled objects.

13. The apparatus of claim 11 or 12, wherein the second determining module comprises:
a second determining unit, configured to determine a second correspondence among preset areas of the touch pad, gestures and control modes of the target controlled object based on the target controlled object; and
a third determining unit, configured to determine the target control mode corresponding to the second gesture in the second area based on the second correspondence.

14. The apparatus of claim 11 or 12, further comprising:
a first displaying module, configured to display, by a preset manner, first prompt information of the target controlled object corresponding to the first gesture in the first area and second prompt information of a gesture corresponding to at least one control mode of the target controlled object.

15. The apparatus of claim 14, further comprising:
an obtaining module, configured to obtain a confirmation instruction for the target controlled object.

16. The apparatus of claim 14, wherein the touch pad is connected to a display screen, and the first displaying module comprises:
a first displaying unit, configured to display the first prompt information and the second prompt information through the display screen.

17. The apparatus of claim 16, wherein the first displaying module further comprises:
a second displaying unit, configured to display third prompt information of inputting a gesture in response to not detecting the second gesture in the second area of the touch pad within a first preset period of time; and
a controlling unit, configured to control the display screen to exit an interface displaying the first prompt information and the second prompt information, in response to not detecting the second gesture of the second area of the touch pad within a second preset period of time after displaying the third prompt information of inputting the gesture.

18. The apparatus of claim 12, further comprising:
a second displaying module, configured to display fourth prompt information of re-inputting a gesture in response to determining that there is no controlled object corresponding to the first gesture in the first area based on the first correspondence.

19. The apparatus of claim 13, further comprising:
a third displaying module, configured to display fifth prompt information of re-inputting a gesture in response to determining that there is no control mode corresponding to the second gesture in the second area based on the second correspondence.

20. The apparatus of any one of claims 11-19, wherein the touch pad is installed in any one of the following positions of a vehicle: a right-hand console, a surface of a gear shifter, a trim on a left-hand front door and a center of a steering wheel.

21. An electronic device, comprising:
at least one processor; and
a memory communicatively coupled to the at least one processor; wherein,
the memory is configured to store instructions executable by the at least one processor, and when the instructions are executed by the at least one processor, the at least one processor is enabled to perform the method according to any one of claims 1-10.

22. A non-transitory computer-readable storage medium having computer instructions stored thereon, wherein the computer instructions are configured to cause a computer to perform the method according to any one of claims 1-10.

23. A computer program product comprising computer programs, wherein when the computer programs are executed by a processor, the method according to any one of claims 1-10 is performed.
